# EUROPÄISCHE PATENTANMELDUNG

(11) **EP 0 717 141 A2**
(43) Veröffentlichungstag der Anmeldung: **19.06.1996**
(21) Anmeldenummer: 95119191.5
(22) Anmeldetag: 06.12.1995
(51) Int. Cl.: D06P 1/647

(54) **Verwendung von Glycin-N,N-diessigsäure-Derivaten als biologisch abbaubare Komplexbildner für Erdalkali- und Schwermetallionen in Färbebädern und Färbenachbehandlungsbädern in der Textilindustrie**

(30) Priorität: 14.12.1994 DE 4444349
(71) Anmelder: BASF AKTIENGESELLSCHAFT, D-67056 Ludwigshafen (DE)
(72) Erfinder: Greindl, Thomas, Dr., D-67098 Bad Dürkheim (DE); Karl, Ulrich, Dr., D-67061 Ludwigshafen (DE); Kromm, Erich, Dr., D-67256 Weisenheim (DE); Potthoff-Karl, Birgit, Dr., D-67061 Ludwigshafen (DE)

(57) **Zusammenfassung**

Verwendung von Glycin-N,N-diessigsäure-Derivaten und ihren Alkalimetall-, Erdalkalimetall-, Ammonium- und substituierten Ammoniumsalzen als Komplexbildner für Erdalkali- und Schwermetallionen in Färbebädern und Färbenachbehandlungsbädern in der Textilindustrie.

## Beschreibung

Die vorliegende Erfindung betrifft die Verwendung von Glycin-N,N-diessigsäure-Derivaten und ihren Alkalimetall-, Erdalkalimetall-, Ammonium- und substituierten Ammoniumsalzen als Komplexbildner für Erdalkali- und Schwermetallionen in Färbebädern und Färbenachbehandlungsbädern in der Textilindustrie.

Weiterhin betrifft die vorliegende Erfindung Färbebäder und Färbenachbehandlungsbäder für die Textilindustrie, welche diese Glycin-N,N-diessigsäure-Derivate enthalten.

Als Komplexbildner für Erdalkali- und Schwermetallionen auf den verschiedensten technischen Gebieten mit ihren teilweise stark voneinander abweichenden Anforderungs- und Problemfeldern werden üblicherweise immer noch altbekannte und bewährte Systeme wie Polyphosphate, Nitrilotriessigsäure oder Ethylendiamintetraessigsäure eingesetzt. Diese Mittel zeigen allerdings gewisse Nachteile, prinzipielle Schwachpunkte sind insbesondere ihr noch verbesserungsbedürftiges Calcium- und Mangan-Bindevermögen, ihre noch nicht optimale stabilisierende Wirkung in Bleichbädern und Bleichsystemen sowie ihre meist unzureichende biologische Abbaubarkeit bzw. Eliminierbarkeit.

Beim Färben und Nachbehandeln von Färbungen in der Textilindustrie arbeitet man in der Regel ohne Komplexbildner als Hilfsmittel.

Aus der nachverdffentlichten deutschen Patentanmeldung P 43 19 935.6 ist die Verwendung der hier beschriebenen Glycin-N,N-diessigsäure-Derivate als Komplexbildner für Erdalkali- und Schwermetallionen generell bekannt. Es werden die verschiedensten Anwendungen empfohlen, beispielsweise der Einsatz in Vorbehandlungs- und Bleichbädern in der Textilindustrie. Jedoch wird nicht erwähnt, daß sich diese Verbindungen auch als Hilfsmittel bei der Textilfärberei eignen.

Aufgabe der vorliegenden Erfindung war es, wirksame Komplexbildner für die Textilfärberei zur Verfügung zu stellen.

Demgemäß wurde die Verwendung von Glycin-N,N-diessigsäure-Derivaten der allgemeinen Formel I 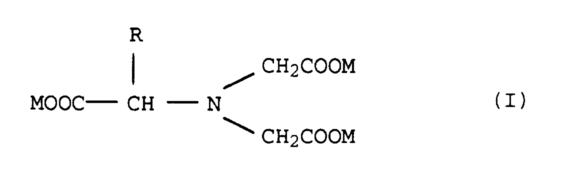
in der
- R: für C₁- bis C₃₀-Alkyl oder C₂- bis C₃₀-Alkenyl, welche zusätzlich als Substituenten bis zu 5 Hydroxylgruppen, Formylgruppen, C₁- bis C₄-Alkoxygruppen, Phenoxygruppen oder C₁-bis C₄-Alkoxycarbonylgruppen tragen und durch bis zu 5 nicht benachbarte Sauerstoffatome unterbrochen sein können, Alkoxylat-Gruppierungen der Formel ―CH₂)ₖ―O―(A¹O)ₘ―(A²O)ₙ―Y, in der A¹ und A² unabhängig voneinander 1,2-Alkylengruppen mit 2 bis 4 C-Atomen bezeichnen, Y Wasserstoff, C₁- bis C₁₂-Alkyl, Phenyl oder C₁- bis C₄-Alkoxycarbonyl bedeutet und k für die Zahl 1, 2 oder 3 sowie m und n jeweils für Zahlen von 0 bis 50 stehen, wobei die Summe aus m + n mindestens 4 betragen muß, Phenylalkylgruppen mit 1 bis 20 C-Atomen im Alkyl, einen fünf- oder sechsgliedrigen ungesättigten oder gesättigten heterocyclischen Ring mit bis zu drei Heteroatomen aus der Gruppe Stickstoff, Sauerstoff und Schwefel, welcher zusätzlich benzanelliert sein kann, tragende C₁- bis C₂₀-Alkylgruppen, wobei alle bei den Bedeutungen für R genannten Phenylkerne und heterocyclischen Ringe noch zusätzlich als Substituenten bis zu drei C₁- bis C₄-Alkylgruppen, Hydroxylgruppen, Carboxylgruppen, Sulfogruppen oder C₁- bis C₄-Alkoxycarbonylgruppen tragen können, oder einen Rest der Formel 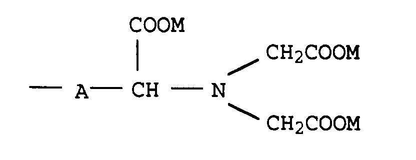 steht, wobei A eine C₁- bis C₁₂-Alkylen-Brücke, vorzugsweise eine C₂- bis C₁₂-Alkylen-Brücke, oder eine chemische Bindung bezeichnet, und
- M: Wasserstoff, Alkalimetall, Erdalkalimetall-, Ammonium oder substituiertes Ammonium in den entsprechenden stöchiometrischen Mengen bedeutet,
als Komplexbildner für Erdalkali- und Schwermetallionen in Färbebädern und Färbenachbehandlungsbädern in der Textilindustrie gefunden.

In einer bevorzugten Ausführungsform werden als Verbindungen I solche eingesetzt, bei denen R für C₁- bis C₂₀-Alkyl, C₂- bis C₂₀-Alkenyl oder einen Rest der Formel 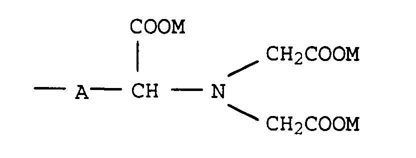
steht.

In einer besonders bevorzugten Ausführungsform werden als Verbindung I α-Alanin-N,N-diessigsäure (R=CH₃) und ihre Alkalimetall-, Anmonium- und substituierten Ammoniumsalze eingesetzt.

Als derartige Salze eignen sich vor allem die Natrium-, Kalium- und Ammoniumsalze, insbesondere das Trinatrium-, Trikalium- und Triammoniumsalz sowie organische Triaminsalze mit einem tertiären Stickstoffatom.

Als den organischen Aminsalzen zugrundeliegende Basen kommen insbesondere tertiäre Amine, wie Trialkylamine mit 1 bis 4 C-Atomen im Alkyl, wie Trimethyl- und Triethylamin, und Trialkanolamine mit 2 oder 3 C-Atomen im Alkanolrest, bevorzugt Triethanolamin, Tri-n-propanolamin oder Triisopropanolamin, in Betracht.

Als Erdalkalimetallsalze werden insbesondere die Calcium- und Maghesiumsalze eingesetzt.

Neben Methyl kommen für den Rest R als geradkettige oder verzweigte Alk(en)ylreste vor allem C₂- bis C₁₇-Alkyl und -Alkenyl, hierbei insbesondere geradkettige, von gesättigten oder ungesättigten Fettsäuren abgeleitete Reste, in Betracht. Beispiele für einzelne Reste R sind: Ethyl, n-Propyl, iso-Propyl, n-Butyl, iso-Butyl, sec.-Butyl, tert.-Butyl, n-Pentyl, iso-Pentyl, tert.-Pentyl, Neopentyl, n-Hexyl, n-Heptyl, 3-Heptyl (abgeleitet von 2-Ethylhexansäure), n-Octyl, iso-Octyl (abgeleitet von iso-Nonansäure), n-Nonyl, n-Decyl, n-Undecyl, n-Dodecyl, iso-Dodecyl (abgeleitet von ios-Tridecansäure), n-Tridecyl, n-Tetradecyl, n-Pentadecyl, n-Hexadecyl, n-Heptadecyl, n-Octadecyl, n-Nonadecyl, n-Eicosyl und n-Heptadecenyl (abgeleitet von Ölsäure). Es können für R auch Gemische auftreten, insbesondere solche, die sich von natürlich vorkommenden Fettsäuren und von synthetisch erzeugten technischen Säuren, beispielsweise durch Oxosynthese, ableiten.

Als C₁- bis C₁₂-Alkylen-Brücken A dienen vor allem Polymethylengruppierungen der Formel ―(CH₂)ₖ―, worin k eine Zahl von 2 bis 12, insbesondere von 2 bis 8 bezeichnet, d. h. 1,2-Ethylen, 1,3-Propylen, 1,4-Butylen, Pentamethylen, Hexamethylen, Heptamethylen, Octamethylen, Nonamethylen, Decamethylen, Undecamethylen und Dodecamethylen. Hexamethylen, Octamethylen, 1,2-Ethylen und 1,4-Butylen werden hierbei besonders bevorzugt. Daneben können aber auch verzweigte C₁- bis C₁₂-Alkylengruppen auftreten, z. B. ―CH₂CH(CH₃)CH₂―, ―CH₂C(CH₃)₂CH₂―, ―CH₂CH(C₂H₅)― oder ―CH₂CH(CH₃)―.

Die C₁- bis C₃₀-Alkyl- und C₂- bis C₃₀-Alkenylgruppen können bis zu 5, insbesondere bis zu 3 zusätzliche Substituenten der genannten Art tragen und durch bis zu 5, insbesondere bis zu 3 nicht benachbarte Sauerstoffatome unterbrochen sein. Beispiele für solche substituierten Alk(en)ylgruppen sind ―CH₂OH, ―CH₂CH₂OH, ―CH₂CH₂-O-CH₃, ―CH₂CH₂―O―CH₂CH₂―O―CH₃, ―CH₂―O―CH₂CH₃, ―CH₂―O―CH₂CH₂―OH, ―CH₂―CHO, ―CH₂―OPh, ―CH₂-COOCH₃ oder ―CH₂CH₂―COOCH₃.

Als Alkoxylat-Gruppierungen kommen insbesondere solche in Betracht, bei denen m und n jeweils für Zahlen von 0 bis 30, vor allem von 0 bis 15 stehen. A¹ und A² bedeuten von Butylenoxid und vor allem von Propylenoxid und von Ethylenoxid abgeleitete Gruppen. Von besonderem Interesse sind reine Ethoxylate und reine Propoxylate, aber auch Ethylenoxid-Propylenoxid-Blockstrukturen können auftreten.

Als fünf- oder sechsgliedrige ungesättigte oder gesättigte heterocyclische Ringe mit bis zu drei Heteroatomen aus der Gruppe Stickstoff, Sauerstoff und Schwefel, welche zusätzlich benzanelliert und durch die bezeichneten Reste substituiert sein können, kommen in Betracht:

Tetrahydrofuran, Furan, Tetrahydrothiophen, Thiophen, 2,5-Dimethylthiophen, Pyrrolidin, Pyrrolin, Pyrrol, Isoxazol, Oxazol, Thiazol, Pyrazol, Imidazolin, Imidazol, 1,2,3-Triazolidin, 1,2,3- und 1,2,4-Triazol, 1,2,3- , 1,2,4- und 1,2,5-Oxadiazol, Tetrahydropyran, Dihydropyran, 2H- und 4H-Pyran, Piperidin, 1,3- und 1,4-Dioxan, Morpholin, Pyrazan, Pyridin, α-, β- und γ-Picolin, α- und γ-Piperidon, Pyrimidin, Pyridazin, Pyrazin, 1,2,5-Oxathiazin, 1,3,5-, 1,2,3- und 1,2,4-Triazin, Benzofuran, Thionaphthen, Indolin, Indol, Isoindolin, Benzoxazol, Indazol, Benzimidazol, Chroman, Isochroman, 2H- und 4H-Chromen, Chinolin, Isochinolin, 1,2,3,4-Tetrahydroisochinolin, Cinnolin, Chinazolin, Chinoxalin, Phthalazin und Benzo-1,2,3-triazin.

N-H-Gruppierungen in den genannten heterocyclischen Ringen sollten möglichst in derivatisierter Form, etwa als N-Alkyl-Gruppierung, vorliegen.

Bei Substitution an den Phenylkernen oder den heterocyclischen Ringen treten vorzugsweise zwei (gleiche oder verschiedene) oder insbesondere ein einzelner Substituent auf.

Beispiele für gegebenenfalls substituierte Phenylalkylgruppen und heterocyclische Ringe tragende Alkylgruppen für R sind Benzyl, 2-Phenylethyl, 3-Phenylpropyl, 4-Phenylbutyl, o-, m- oder p-Hydroxylbenzyl, o-, m- oder p-Carboxylbenzyl, o-, m- oder p-Sulfobenzyl, o-, m- oder p-Methoxy oder -Ethoxycarbonylbenzyl, 2-Furylmethyl, N-Methylpiperidin-4-ylmethyl oder 2-, 3- oder 4-Pyridinylmethyl.

Bei Substitution an Phenylkernen und auch an heterocyclischen Ringen treten bevorzugt wasserlöslich machende Gruppen wie Hydroxylgruppen, Carboxylgruppen oder Sulfogruppen auf.

Als Beispiele für die genannten C₁- bis C₄-, C₁- bis C₁₂- und C₁- bis C₂₀-Alkylgruppen sind auch die entsprechenden oben aufgeführten Reste für R zu verstehen.

Die genannten Färbebäder und Farbenachbehandlungsbäder enthalten die üblichen Farbstoffe und Hilfsmittel. Als Farbstoffe dienen in der Regel Küpen-, Reaktiv-, Direkt-, Dispersionsfarbstoffe oder Mischungen hieraus. Die zu färbenden oder nachzubehandelnden Textilien oder Textilvorstufen sind üblicherweise Gewebe oder Gewirke sowie Garn oder Flocke mit Fasern aus Baumwolle, Polyester, Cellulosetriacetat sowie Mischungen daraus. Weiterhin können Fasern und deren Mischungen aus Polyamid, Wolle, Polyacrylnitril, Celluloseacetat eingesetzt werden.

Die Färbe- bzw. Färbenachbehandlungsbäder enthalten die Verbindungen I üblicherweise in Mengen von 0,01 bis 20 g/l, vorzugsweise 0,1 g bis 10 g/l, insbesondere 0,5 g bis 3 g/l.

Die erfindungsgemäß verwendeten Verbindungen I werden häuptsächlich zur Entfernung der Wasserhärte (Komplexierung von Calcium- und Magnesiumsalzen) und zur Entfernung von störenden Schwermetallionen wie Eisen, Kupfer, Mangan oder Zink eingesetzt. Durch die erfindungsgemäße Verwendung beim Färben, Überfärben und Nachbehandeln der Gewebe werden die Echtheiten wie Reib- und Waschechtheiten sowie die Egalität der Färbung erhöht.

Weitere Vorteile der Verbindungen I sind ihr sehr geringes Toxizitätspotential und ihre gute biologische Abbaubarkeit. So zeigt α-Alanin-N,N-diessigsäure im Zahn-Wellens-Test unter Standardbedingungen eine biologische Abbaubarkeit > 90 % (28-Tage-Wert), wogegen beispielsweise Ethylendiamintetraessigsäure unter gleichen Bedingungen einen Wert von < 10 % ergibt.

Das erfindungsgemäße Färbeverfahren und Färbenachbehandlungsverfahren können sowohl kontinuierlich als auch diskontinuierlich durchgeführt werden.

### Herstellungsbeispiel

### Beispiel 1

### Herstellung von α-D,L-Alanin-N,N-diessigsäure-Trinatriumsalz aus α-D,L-Alanin

Zu einer Suspension von 44 g D,L-Alanin (> 99 gew.-%ig) in 200 g Wasser gab man bei 30°C gleichzeitig 105 g Formaldehyd (30 gew.-%ig) und 31,7 g Blausäure (89,5 gew.-%ig). Es wurde noch 3 Stunden bei 30°C nachgerührt. Die Blausäure-Abnahme entsprach einem Umsatz von > 97 % der Theorie.

Die so erhaltene wäßrige Lösung von α-D,L-Alanin-N,N-diacetonitril wurde bei 30°C zu 132 g 50 gew.-%iger Natronlauge getropft. Nach 8-stündigem Rühren bei 30°C wurde die Temperatur auf 95 bis 102°C erhöht. Nach weiteren 4 Stunden war die Umsetzung praktisch vollständig. Man erhielt 352,5 g einer Lösung, die gemäß ihrem Eisen-Bindevermögen 37,4 Gew.-% α-D,L-Alanin-N,N-diessigsäure-Trinatriumsalz enthielt (entsprechend einer Ausbeute von 97,4 % der Theorie über beide Stufen).

### Anwendungsbeispiele

### Beispiel 2

### Färben von Polyesterfasern

100 g Polyesterfasern wurden in einer Druckapparatur in 2000 g Wasser der Härte 20° dH mit 1 g des Farbstoffes Disperse Red 91, 4 g eines üblichen Naphthalinsulfonsäure-Formaldehyd-Kondensats als Dispergiermittel, 4 g eines üblichen Gemisches aus aromatischen Estern und nichtionischen Tensiden als Egalisiermittel und 2 g des Komplexbildners aus Beispiel 1 versetzt, mit Essigsäure auf pH 4,5 bis 5,0 eingestellt, auf 130°C erhitzt und 60 min bei dieser Temperatur gefärbt. Danach wurde abgekühlt und gewaschen. Man erhielt eine vollkommen egale und intensive Färbung.

### Vergleichsbeispiel A

Die Färbung aus Beispiel 2 wurde ohne Komplexbildner wiederholt. Man erhielt eine unegalere Färbung mit nur etwa 65 % der Farbtiefe wie in Beispiel 2.

### Beispiel 3

### Färben von Polyester/Cellulose-Mischgewebe

100 g eines Mischgewebes aus Polyester und Cellulose (1:1) wurden in einer Druckapparatur in 1500 g Wasser der Härte 10° dH mit 1,5 g eines üblichen Naphthalinsulfonsäure-Formaldehyd-Kondensats als Dispergiermittel, 2 g eines üblichen Polyacrylats als Schutzkolloid, 1,5 g des Komplexbildners aus Beispiel 1, 1,5 g des Farbstoffes Disperse Blue 148 und 1,5 g des Farbstoffes Vat Blue 4 versetzt, mit Essigsäure auf pH 4,5 bis 5,0 eingestellt, auf 130°C erhitzt und 60 min bei dieser Temperatur gefärbt. Danach wurde auf 80°C abgekühlt und bei dieser Temperatur wie üblich 15 min mit Natronlauge und Natriumhydrogensulfit behandelt. Anschließend wurde noch 15 bis 20 min bei 50 bis 60°C gefärbt. Man erhielt eine vollkommen egale und intensive Färbung.

### Vergleichsbeispiel B

Die Färbung aus Beispiel 3 wurde ohne Komplexbildner wiederholt. Man erhielt eine unegalere und um 40 % farbtonschwächere Färbung.

### Beispiel 4

### Färben von Baumwolle

Gebleichtes Baumwoll-Trikot wurde im Flottenverhältnis 1:20 in einem Laborbecherbad gefärbt. Die Färbeflotte mit einer Wasserhärte von 20° dH enthielt 2 g/l des Farbstoffes Vat Blue 4, 18 ml/l Natronlauge (38° Be), 6 g/l Natriumdithionit und 1 g/l des Komplexbildners aus Beispiel 1. Das Färbegefäß wurde bei 25°C in das Heizbad eingebracht und auf 60°C erhitzt, dann färbte man 45 Minuten bei dieser Temperatur. Anschließend wurde die Färbung in üblicher Weise durch Oxidieren, Spülen und Seifen fertiggestellt.

Man erhielt eine reib- und waschechte egale Färbung.

### Vergleichsbeispiel C

Die Färbung aus Beispiel 4 wurde ohne Komplexbildner wiederholt. Man erhielt eine unegale, fleckige Färbung mit nur etwa 20 % der Farbtiefe wie in Beispiel 4.

## Patentansprüche

1. Verwendung von Glycin-N,N-diessigsäure-Derivaten der allgemeinen Formel I 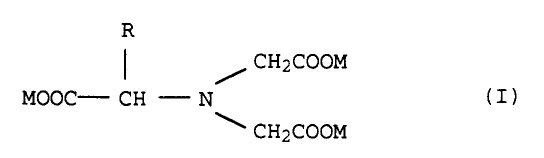 in der
R für C₁- bis C₃₀-Alkyl oder C₂- bis C₃₀-Alkenyl, welche zusätzlich als Substituenten bis zu 5 Hydroxylgruppen, Formylgruppen, C₁- bis C₄-Alkoxygruppen, Phenoxygruppen oder C₁- bis C₄-Alkoxycarbonylgruppen tragen und durch bis zu 5 nicht benachbarte Sauerstoffatome unterbrochen sein können, Alkoxylat-Gruppierungen der Formel ―(CH₂)ₖ―O―(A¹O)ₘ―(A²O)ₙ―Y, in der A¹ und A² unabhängig voneinander 1,2-Alkylengruppen mit 2 bis 4 C-Atomen bezeichnen, Y Wasserstoff, C₁- bis C₁₂-Alkyl, Phenyl oder C₁- bis C₄-Alkoxycarbonyl bedeutet und k für die Zahl 1, 2 oder 3 sowie m und n jeweils für Zahlen von 0 bis 50 stehen, wobei die Summe aus m + n mindestens 4 betragen muß, Phenylalkylgruppen mit 1 bis 20 C-Atomen im Alkyl, einen fünf- oder sechsgliedrigen ungesättigten oder gesättigten heterocyclischen Ring mit bis zu drei Heteroatomen aus der Gruppe Stickstoff, Sauerstoff und Schwefel, welcher zusätzlich benzanelliert sein kann, tragende C₁- bis C₂₀-Alkylgruppen, wobei alle bei den Bedeutungen für R genannten Phenylkerne und heterocyclischen Ringe noch zusätzlich als Substituenten bis zu drei C₁- bis C₄-Alkylgruppen, Hydroxylgruppen, Carboxylgruppen, Sulfogruppen oder C₁- bis C₄-Alkoxycarbonylgruppen tragen können, oder einen Rest der Formel 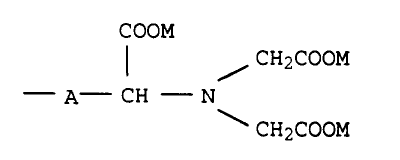 steht, wobei A eine C₁- bis C₁₂-Alkylen-Brücke oder eine chemische Bindung bezeichnet, und
M Wasserstoff, Alkalimetall, Erdalkalimetall, Ammonium oder sübstituiertes Ammonium in den entsprechenden stöchiometrischen Mengen bedeutet,
als Komplexbildner für Erdalkali- und Schwermetallionen in Färbebädern und Färbenachbehandlungsbädern in der Textilindustrie.

2. Verwendung con Glycin-N,N-diessigsäure-Derivaten I, bei denen R für C₁- bis C₂₀-Alkyl, C₂- bis C₂₀-Alkenyl oder einen Rest der Formel 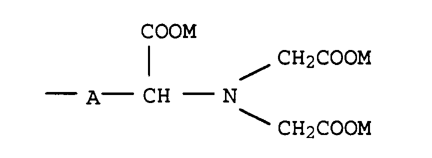 steht, nach Anspruch 1.

3. Verwendung von α-Alanin-N,N-diessigsäure und ihren Alkalimetall-, Ammonium- und substituierten Ammoniumsalzen nach Anspruch 1 oder 2.

4. Färbebäder und Färbnachbehandlungsbäder für die Textilindustrie, enthaltend Glycin-N,N-diessigsäure-Derivate I gemäß den Ansprüchen 1 bis 3.
